# DEMANDE DE BREVET EUROPEEN

(11) **EP 2 374 696 A1**
(43) Date de publication de la demande: **12.10.2011**
(21) Numéro de dépôt: 11157238.4
(22) Date de dépôt: 07.03.2011
(51) Int. Cl.: B62D 21/07, F16F 7/12, B62D 31/00, B60R 19/26, B62D 29/00, B62D 21/15

(54) **Châssis pour véhicule électrique**

(30) Priorité: 06.04.2010 FR 1052564
(71) Demandeur: Akka Ingenierie Produit, 92300 Levallois-Perret (FR)
(72) Inventeur: Ricci, Maurice, 69002, LYON (FR); Villedieu, Christophe, 91310, LONGPONT SUR ORGE (FR); Guillaume, Stéphane, 91160, LONGJUMEAU (FR)
(74) Mandataire: Gaillarde, Frédéric F. Ch.

(57) **Abrégé**

Ce châssis (1) pour véhicule électrique, comprend au moins deux longerons (3, 5), une traverse avant (7) et une traverse arrière (9) reliant entre eux ces deux longerons (3, 5) ; lesdits longerons (3, 5) et lesdites traverses (7, 9) définissent un cadre apte à recevoir, par le dessous du châssis, un accumulateur électrique de forme sensiblement parallélépipédique.

Lesdits longerons (3, 5) sont rectilignes.

## Description

La présente invention se rapporte à un châssis pour véhicule automobile électrique.

De nombreuses études sont en cours sur les véhicules électriques, qui paraissent de plus en plus pouvoir constituer une alternative viable aux véhicules thermiques, et ce notamment grâce à l'amélioration de la capacité des accumulateurs électriques disponibles sur le marché.

L'encombrement de ces accumulateurs demeure toutefois relativement important, et il importe de trouver des agencements permettant de limiter l'impact de cet encombrement sur l'habitabilité du véhicule.

On connaît de la technique antérieure un châssis pour véhicule électrique comprenant au moins deux longerons, une traverse avant et une traverse arrière reliant entre eux ces deux longerons lesdits longerons et lesdites traverses définissant un cadre apte à recevoir, par le dessous du châssis, un accumulateur électrique de forme sensiblement parallélépipédique.

Un tel châssis forme donc logement pour l'accumulateur, de sorte que ce dernier n'interfère pas avec la partie habitable du véhicule.

La mise en place de l'accumulateur par le dessous du châssis évite toute intervention dans cette partie habitable.

Et une fois que l'accumulateur se trouve en place, il est ceinturé, c'est-à-dire entouré par le cadre formé par les longerons et les traverses, ce qui permet de le protéger des chocs tant latéraux que frontaux.

La présente invention a notamment pour but de fournir un tel châssis qui soit économique à fabriquer.

On atteint ce but de l'invention avec un châssis pour véhicule électrique, comprenant au moins deux longerons, une traverse avant et une traverse arrière reliant entre eux ces deux longerons, lesdits longerons et lesdites traverses définissant un cadre apte à recevoir, par le dessous du châssis, un accumulateur électrique de forme sensiblement parallélépipédique, remarquable en ce que lesdits longerons sont rectilignes.

De tels longerons présentent une excellente résistance aux chocs notamment frontaux, par rapport à des longerons classiques présentant des coudes ; de plus, de tels longerons sont plus faciles à fabriquer, et moins coûteux.

Suivant d'autres caractéristiques optionnelles de cette structure de châssis :
- des moyens d'absorption de chocs sont disposés dans le prolongement des extrémités avant desdits longerons : ces moyens d'absorption permettent de protéger les piétons et les passagers du véhicule en cas de choc ; de plus, ils permettent d'assurer l'intégrité de l'accumulateur électrique logé entre les longerons et les traverses avant et arrière ;
- chaque moyen d'absorption de choc comprend une partie avant d'absorption de choc à vitesse relativement faible, et une partie arrière d'absorption de choc à vitesse relativement importante, lesdites parties avant et arrière étant respectivement dimensionnées pour que ladite partie avant s'écrase avant ladite partie arrière en cas de choc frontal ; la partie avant d'absorption de choc permet d'encaisser un choc ne remettant pas en cause la réparabilité du véhicule (essai normalisé de type Danner), et la partie arrière d'absorption permet d'encaisser un choc à grande vitesse sans que soit atteinte l'intégrité des passagers ;
- lesdites parties avant et arrière comprennent chacune des structures cylindriques en matériaux composites : ce type de structures permet d'encaisser une forte énergie sur une distance très courte, grâce à une loi de déformation pratiquement proportionnelle à l'intensité des efforts en jeu ; on peut de la sorte minimiser le porte-à-faux de la carrosserie à l'avant du véhicule, ce qui permet de maximiser le volume de l'habitacle ;
- lesdits moyens d'absorption de choc sont reliés entre eux par une barre transversale de support de pare-choc : une telle barre permet la mise en place du pare-choc (mousse absorbante + peau extérieure du pare-choc), ainsi que la répartition des chocs sur chacun des moyens d'absorption de choc ;
- lesdites traverses avant et arrière sont reliées entre elles par des sur-longerons extérieurs : ces sur-longerons offrent une protection vis-à-vis des chocs latéraux ;
- lesdits longerons, traverses avant et arrière et sur-longerons sont formés dans un alliage à base d'aluminium : un tel alliage fournit un excellent compromis poids/résistance, et permet d'obtenir *in fine* un véhicule relativement léger, peu consommateur d'énergie électrique.

La présente invention se rapporte également à un véhicule automobile équipé d'un châssis conforme à ce qui précède.

D'autres caractéristiques et avantages de la présente invention apparaîtront à la lecture de la description qui va suivre et à l'examen des figures ci-annexées, dans lesquelles :
- la figure 1 est une vue en perspective d'un véhicule électrique équipé d'un châssis conforme à l'invention,
- la figure 2 est une vue en perspective du châssis du véhicule de la figure 1,
- la figure 3 est une vue de dessous de ce châssis,
- la figure 4 est une vue en perspective de l'un des moyens d'absorption de choc de la figure 2,
- la figure 5 est une vue en perspective d'un accumulateur électrique destiné à équiper le véhicule de la figure1, et
- la figure 6 est une vue de dessous du châssis de la figure 3, équipé de son plancher et de l'accumulateur électrique de la figure 5.

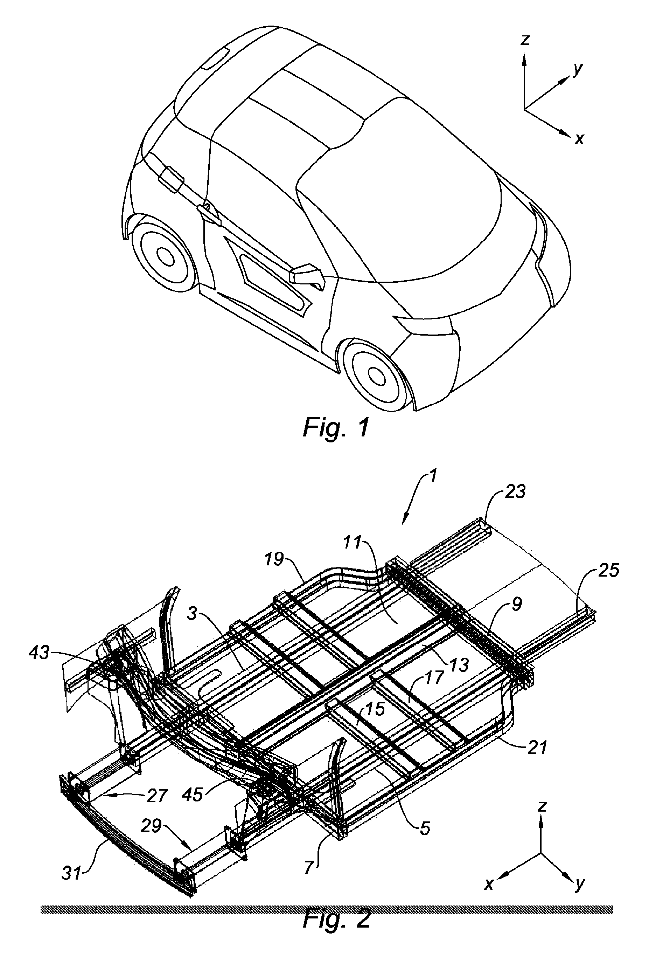

Le véhicule électrique représenté à la figure 1 à titre d'exemple, est un véhicule pouvant typiquement peser environ 700 kg (hors accumulateur électrique), atteindre environ 140 km/h, présenter une autonomie de l'ordre de 200 km, et présenter des dimensions restreintes (typiquement une longueur d'environ 3 m pour quatre vraies places).

Bien entendu, ces données sont fournies à titre de simple exemple, et ne sauraient être considérées comme limitatives.

Compte tenu de l'ensemble de ces données, il importe que le véhicule électrique de la figure 1 présente un châssis léger, résistant, et apte à dissiper l'énergie de chocs notamment frontaux sur de très courtes distances dans le but de protéger tant les passagers du véhicule que l'accumulateur électrique.

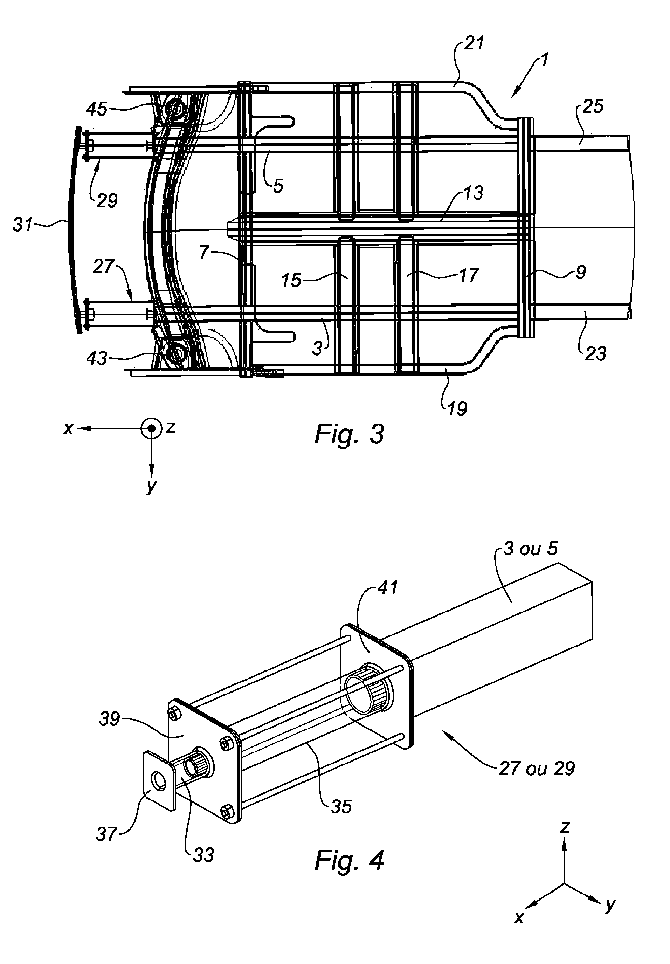

Le châssis représenté aux figures 2 et 3 répond notamment à l'ensemble de ces contraintes.

Sur ces figures et sur les suivantes, on a représenté un repère X, Y, Z, indiquant classiquement les directions longitudinales, transversales et verticales du véhicule.

A noter que la flèche de l'axe X pointe dans le sens d'avancement du véhicule.

Le châssis 1 comporte, en tant que partie structurante, un longeron droit 3 et un longeron gauche 5, reliés entre eux par une traverse avant 7 et une traverse arrière 9.

Comme cela est visible sur les figures 2 et 3, ces longerons et ces traverses sont formés par des profilés rectilignes, formés de préférence dans un alliage à base d'aluminium.

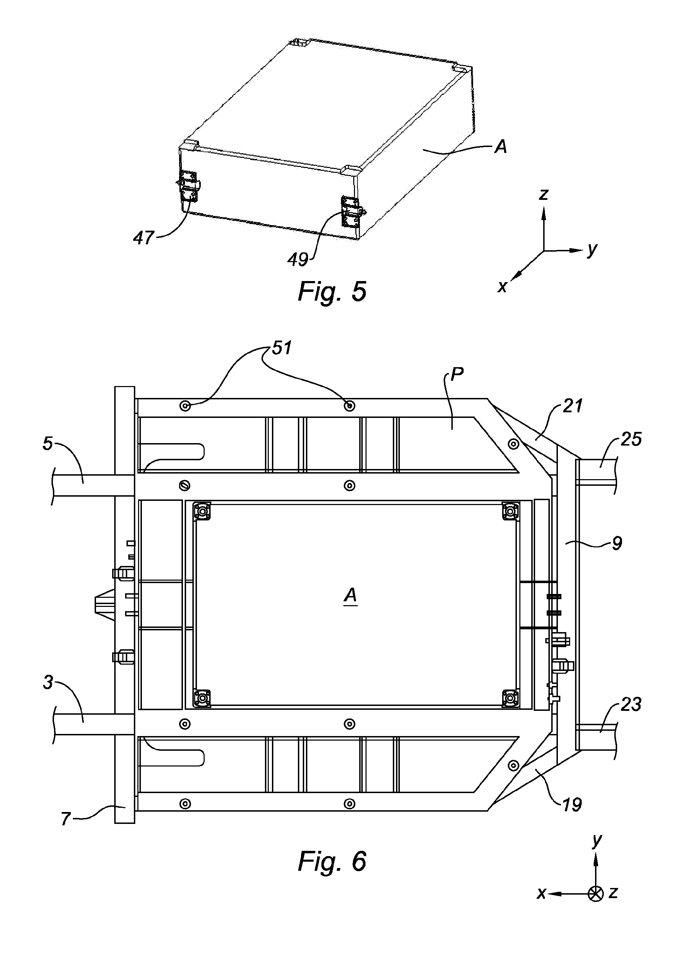

Ces longerons et ces traverses définissent ainsi un cadre définissant lui-même un logement 11, apte à recevoir un accumulateur électrique de forme sensiblement parallélépipédique, tel que représenté à la figure 5, un tel accumulateur étant destiné à être mis en place sur le véhicule par le dessous du châssis.

Sur les longerons 3, 5 et sur les traverses 7, 9 sont fixés des renforts 13, 15, 17, destinés à accueillir notamment le plancher du véhicule et à permettre la fixation des sièges.

Des sur-longerons latéraux 19, 21 disposés à l'extérieur des longerons 3, 5, s'étendent entre les extrémités respectives de la traverse avant 7 et de la traverse arrière 9.

A l'arrière des longerons 3, 5 s'étendent des profilés 23, 25 destinés à former la structure du coffre arrière du véhicule.

L'ensemble des longerons, sur-longerons, traverses et profilés susmentionnés sont reliés entre eux par soudage et/ou par rivetage.

L'habitacle du véhicule représenté à la figure 1 est renforcé par une superstructure (non représentée), destinée à être rapportée sur le châssis 1 représenté aux figures 2 et 3.

Dans sa partie avant, fixée à l'extrémité avant de chaque longeron 3, 5, le châssis 1 comporte des moyens d'absorption de chocs 27, 29, reliés entre eux par une barre de support de pare-chocs 31.

En se reportant à la figure 4 sur laquelle on a représenté l'un de ces moyens d'absorption de chocs, on peut voir que chacun de ces moyens comporte une partie avant 33 et une partie arrière 35.

La partie avant est interposée entre une première plaque métallique 37 destinée à être fixée à la barre de support de pare-chocs 31 et une deuxième plaque 39 fixée à la deuxième partie d'absorption de chocs 35.

Cette deuxième partie 35 s'étend elle-même entre la deuxième plaque 39 et une troisième plaque 41 elle-même fixée à l'extrémité de son longeron associé 3 ou 5.

Les parties d'absorption de chocs 33 et 35 sont de préférence cylindriques, et formées dans des matériaux composites appropriés.

Le terme (cylindrique) englobe tous les volumes engendrés par des génératrices se déplaçant perpendiculairement à un plan, et couvre ainsi en particulier une partie 33, 35 de section circulaire, polygonale, elliptique ou autre, avec ou sans cloison intérieure.

Les parties avant 33 et 35 d'absorption de chocs sont conçues respectivement de manière que la partie 33 se déforme avant la partie 35 en cas de choc notamment frontal.

A titre illustratif et non limitatif, la longueur cumulée de la partie avant 33 et de la partie arrière 35 d'absorption de chocs pourra être de l'ordre de 30 cm, cet ensemble étant dimensionné pour dissiper de manière normalisée l'énergie d'un choc de 30 tonnes.

On notera que le choix de matériaux composites pour les parties avant 33 et arrière 35 d'absorption de chocs est particulièrement approprié pour dissiper une telle énergie sur une courte distance, du fait du comportement linéaire de ces matériaux (distance de déformation sensiblement proportionnelle à l'intensité du choc).

On notera également que la conception des moyens d'absorption de chocs « en deux étages » (partie avant 33 et partie arrière 35) permet de respecter les normes en vigueur : la partie avant 33 est celle qui permet d'encaisser un choc ne remettant pas en cause la réparabilité du véhicule (choc normalisé du type « Danner »), et la partie arrière 35 est celle permettant d'encaisser un choc à grande vitesse sans que soit remise en cause l'intégrité de l'habitacle et des passagers du véhicule.

De par cette conception particulière, les moyens d'absorption de chocs qui viennent d'être décrits permettent d'absorber des chocs importants sur une courte distance, autorisant ainsi la conception d'un véhicule présentant un très faible porte-à-faux à l'avant des roues avant, destinées à être placées au droit des coupelles d'amortisseurs 43 et 45.

Un tel faible porte-à-faux permet de maximiser le volume de l'habitacle du véhicule.

La barre de support de pare-chocs 31 est destinée à être recouverte d'une mousse d'absorption de chocs, du type « Baysafe®», permettant de dissiper l'énergie d'un choc piéton ; cette mousse est elle-même destinée à être recouverte de la peau extérieure du pare-chocs.

On peut voir sur la figure 5 l'accumulateur A mis en place à l'intérieur du logement 11 défini par les longerons 3, 5 et les traverses 7, 9.

Cet accumulateur A de forme sensiblement parallélépipédique (voir figure 5) est mis en place par le dessous du véhicule, lorsque ce dernier se trouve sur un pont de manutention approprié, et fixé aux longerons et aux traverses par des moyens de verrouillage 47, 49 appropriés.

On peut voir également à la figure 6, la manière dont le plancher P, formé par exemple par des plaques en aluminium, est rapporté sur le dessous du châssis, et fixé sur celui-ci par exemple au moyen de rivets 51.

Comme on l'aura compris à la lumière de la description qui précède, le châssis 1 qui vient d'être exposé est d'une conception extrêmement simple.

Il est essentiellement constitué par de éléments rectilignes (longerons 3, 5 et traverses 7, 9), c'est-à-dire ne présentant pas de coudes.

Cette caractéristique rend la fabrication de ces longerons très simple et peu coûteuse, et permet une résistance optimale vis-à-vis de chocs notamment frontaux, par opposition au châssis classique à longerons coudés.

A noter que l'absence de coude est inhérente à la conception d'ensemble du véhicule électrique représenté à la figure 1, ne comportant pas de moteur à l'avant, mais plutôt des moteurs électriques disposés à l'intérieur des roues ou en-dessous du châssis, et de préférence à l'arrière du véhicule.

Cette caractéristique permet de s'affranchir d'une structure classique de berceau à l'avant du véhicule, présentant des parties coudées nécessaires au passage de la transmission vers les roues avant.

L'absorption des chocs notamment frontaux est obtenue grâce aux moyens d'absorption de chocs 27, 29, qui de par leur conception particulière explicitée ci-dessus, permettent d'absorber des efforts très importants sur une très courte distance.

Ceci permet, moyennant un encombrement très restreint autorisant une optimisation de l'espace habitable du véhicule, de préserver l'intégrité tant de l'habitacle que de ses passagers, ainsi que de l'accumulateur électrique A.

L'intégrité de ce dernier accumulateur est en outre garantie par la forme particulière de cadre de protection qu'assurent les traverses avant 7, 9 et les longerons 3,5.

A noter que les sur-longerons latéraux 19 et 21, coopérant d'une part avec les traverses avant et arrière 7, 9 et d'autre part, avec les renforts 15, 17, permettent de protéger le châssis et l'habitacle du véhicule vis-à-vis de chocs latéraux.

Le fait de choisir un ou des alliages à base d'aluminium pour l'ensemble des longerons, sur-longerons, traverses et profilés du châssis 1, permet d'obtenir un excellent compromis entre le poids et la résistance de la structure, et ainsi en particulier d'améliorer l'autonomie procurée par l'accumulateur électrique 1.

Bien entendu, la présente invention n'est nullement limitée à l'exemple décrit et représenté ci-dessus, fourni à titre simplement illustratif.

## Revendications

1. Châssis (1) pour véhicule électrique, comprenant au moins deux longerons (3, 5), une traverse avant (7) et une traverse arrière (9) reliant entre eux ces deux longerons (3, 5), lesdits longerons (3, 5) et lesdites traverses (7, 9) définissant un cadre apte à recevoir, par le dessous du châssis, un accumulateur électrique (A) de forme sensiblement parallélépipédique, **caractérisé en ce que** lesdits longerons (3, 5) sont rectilignes.

2. Châssis (1) selon la revendication 1, **caractérisé en ce que** des moyens d'absorption de chocs (27, 29) sont disposés dans le prolongement des extrémités avant desdits longerons (3, 5).

3. Châssis (1) selon la revendication 2, **caractérisé en ce que** chaque moyen d'absorption de choc (27, 29) comprend une partie avant (33) d'absorption de choc à vitesse relativement faible, et une partie arrière (35) d'absorption de choc à vitesse relativement importante, lesdites parties avant (33) et arrière (35) étant respectivement dimensionnées pour que ladite partie avant (33) s'écrase avant ladite partie arrière (35) en cas de choc frontal.

4. Châssis (1) selon la revendication 3, **caractérisé en ce que** lesdites parties avant (33) et arrière (35) comprennent chacune des structures cylindriques en matériaux composites.

5. Châssis (1) selon l'une quelconque des revendications 2 à 4, **caractérisé en ce que** lesdits moyens d'absorption de choc (27, 29) sont reliés entre eux par une barre transversale de support de pare-choc (31).

6. Châssis (1) selon l'une quelconque des revendications précédentes, **caractérisé en ce que** lesdites traverses avant (7) et arrière (9) sont reliées entre elles par des sur-longerons extérieurs (19, 21).

7. Châssis (1) selon la revendication 6, **caractérisé en ce que** lesdits longerons (3, 5), traverses avant (7) et arrière (9) et sur-longerons (19, 21) sont formés dans un alliage à base d'aluminium.

8. Véhicule automobile muni d'un châssis (1) conforme à l'une quelconque des revendications précédentes.
